# EUROPEAN PATENT APPLICATION

(11) **EP 4 787 266 A1**
(43) Date of publication of application: **05.08.2026**
(21) Application number: 25290007.1
(22) Date of filing: 04.02.2025
(51) Int. Cl.: G06Q 20/20, G06F 3/16, G06F 21/32, G06Q 20/40, G07F 7/08

(54) **METHOD, READER DEVICE AND SYSTEM FOR PROVIDING A BIOMETRIC-ENABLED TRANSACTION PROCESS**

(71) Applicant: Giesecke+Devrient ePayments GmbH, 81677 München (DE)
(72) Inventor: Pierrick, DELOLME, 69290 Craponne (FR); Ulrich,ZIEGLMAIER, 81677 Munich (DE)
(74) Representative: LKGLOBAL Partnerschaftsgesellschaft mbB

(57) **Abstract**

The invention relates to a method for providing a biometric-enabled transaction process. The method comprises obtaining an information relating to the transaction process at a reader device (10), receiving a set of application identifiers from a user device (20) having a biometric functionality, activating a voice functionality of the reader device (10) if it is determined that the received set of application identifiers comprises a first application identifier associated to a voice application, wherein the voice functionality configures the reader device (10) to provide a voice output to a user (22) of the user device (20), receiving user authentication data from the user device (20), wherein the user authentication data is generated based on the biometric functionality of the user device (20), and initiating the transaction process upon positive authentication of the user (22). The invention also relates to a reader device (10) and system (100) for providing a biometric-enabled transaction process.

## Description

The present invention generally relates to a transaction process using biometric and voice functionality. In particular, the invention relates to a method for providing a biometric-enabled transaction process, a reader device for providing a biometric-enabled transaction process as well as a system for providing a biometric-enabled transaction process.

Biometric authentication is widely recognized as a robust and secure method for verifying an individual's identity. For example, biometric-enabled devices, in particular biometric-enabled cards, have gained substantial popularity and relevance in various applications, including access control, financial transactions, and identity verification. These biometric-enabled devices or cards typically incorporate biometric sensors, such as fingerprint scanners, iris scanners, or facial recognition systems, to enhance security and user convenience. That is, the usage of biometric-enabled devices or cards may facilitate transaction processes like a payment transaction since the users can easily and quickly provide the required authentication information by intuitively interacting with the biometric-enabled devices or cards, for example by pressing a finger onto a fingerprint scanner, which allows to efficiently complete the transaction process.

However, it may be difficult for certain users to carry out a transaction process due to a lack of information which may occur as a result of the user having difficulties to perceive such information. In particular, some users might not be able to perceive or notice all information required to carry out a transaction process due to physical disabilities or other restrictions that might reduce the capability to perceive such information. For example, visually impaired persons might not be able to see and thus visually obtain the required information, such as an amount to be paid which is usually displayed on a screen of a check-out station or terminal. This makes it very difficult for visually impaired persons to efficiently complete a transaction process and to make sure that the correct amount is transferred.

It may be seen as an object of the invention to facilitate a transaction process.

A method, a reader device and a system according to the features of the independent claims are provided. Further embodiments of the invention are evident from the dependent claims, the Figures and the following description.

According to an aspect of the invention, a method for providing a biometric-enabled transaction process is provided. A step of the method comprises obtaining an information relating to a transaction process at a reader device. Another step of the method comprises receiving, at the reader device, a set of application identifiers from a user device, wherein the user device has a biometric functionality. Another step of the method comprises activating a voice functionality of the reader device if it is determined that the received set of application identifiers comprises a first application identifier associated to a voice application, wherein the voice functionality configures the reader device to provide a voice output to a user of the user device. Another step of the method comprises receiving, by the reader device, user authentication data from the user device, wherein the user authentication data is generated based on the biometric functionality of the user device. Another step of the method comprises initiating the transaction process upon positive authentication of the user. The method steps may be carried out in the indicated order.

The inventive method enables a visually impaired person to carry out a transaction process using the user device with the biometric functionality, like a biometric-enabled card or mobile device, in an efficient and secure manner. In particular, the visually impaired person can use the user device with the biometric functionality, i.e., the biometric-enabled device, to activate a vocal application executed by the reader device, such that an audible voice output can be provided to the user.

For example, if the visually impaired user wishes to carry out a payment transaction process, the cashier will input the information, e.g., an amount to be paid, into the reader device which cannot be visually seen by the user due to the visual impairment. The user may then present the user device with the biometric functionality to the reader device, thus enabling a data transfer between the user device and the reader device. The user device may have stored a plurality of application identifiers, wherein one of these application identifiers, e.g., the first application identifier associated to the voice application, is configured to activate the voice application on the reader device. Thus, upon receiving the application identifiers from the user device, a voice output functionality of the reader device may be activated, wherein the voice output specifies the information, e.g., the amount to be paid, to the user, for example via a loudspeaker or the like, such that the user can audibly perceive the information, e.g., the amount to be paid, which was previously input by the cashier into the reader device. The further authentication may be carried out by the user presenting the user device again to the reader device while using the biometric functionality of the user device, for example by pressing a finger onto a fingerprint sensor of the user device. The authentication may thus include obtaining a physical or biometric characteristic of the user based on which the user is identified. If the user identification is successful and the authentication is thus positive, the payment transaction process can be initiated and/or completed.

The reader device may be a payment terminal device like a point of sale (POS) terminal, a credit card machine, a card reader, or a PIN pad, into which the user can input a card pin to initiate the payment transaction process. The user device may be a payment card, like a debit or credit card, which includes a biometric functionality, for example a sensor configured to obtain biometric information from the user. The data transfer between the user device and the reader device may be provided by using a suitable communication technique like Near Field Communication (NFC), etc.

A biometric-enabled transaction process may be understood in that the method may include at least one step in which a biometric functionality of a device is used, for example during authentication of the user.

The information relating to the transaction process at the reader device may represent an amount of money, e.g., corresponding to a price or costs of a product or service, that the user has to pay in the context of the transaction process. This can be an amount of money which is input into the reader device by the cashier.

The set of application identifiers (AIDs) from the user device may address respective applications and/or functionalities provided by the user device. Upon request by the reader device, the user device may transmit a list of such applications and/or functions to the reader device, which enables the reader device to perform corresponding applications and/or functions and thus to perform the transaction process.

One of the application identifiers, for example the first application identifier associated to the voice application described herein, may be used to activate the voice functionality of the reader device which configures the reader device to provide the voice output to the user of the user device. The voice output may indicate the information, e.g., the specific amount to be paid, such that the user can hear this information, e.g., the amount to be paid, and then decide whether or not to proceed with authentication. The voice output may be provided via a loudspeaker of the reader device.

If the user then proceeds with the authentication, the user is not required to input any PIN into the reader device, but may instead provide the authentication via the biometric functionality of the user device. For example, the user device may comprise a fingerprint sensor onto which the user may put a finger while presenting the user device to the reader device, e.g., while bringing the user device close to the reader device for communication therebetween. This also facilitates the authentication and thus the entire transaction process for a visually impaired user and, additionally, makes the entire transaction process more secure for the visually impaired user.

The authentication data from the user device may be processed at the reader device and/or the user device and, if authentication is positive, the transaction process can be initiated. This may include processing the transaction in a further step of the method. A corresponding information about the successful transaction process may be provided, for example also via a voice output by the reader device. Otherwise, if the authentication is negative, the transaction process is abandoned or cancelled. A corresponding information about unsuccessful authentication may be provided, for example also via a voice output by the reader device.

In other words, the inventive method may allow a transaction process for which in one or more of the process steps a voice functionality is enabled in order to audibly provide important information to the parties, e.g., to the user and/or the cashier, such that the parties can hear the information and perform the required actions to complete the transaction process.

According to an embodiment, the method further comprises providing the voice output to the user of the user device upon activating the voice functionality of the reader device.

This means that the voice output of transaction-related information may be automatically provided after the voice functionality of the reader device has been activated. The voice output may be provided via a loudspeaker of the reader device.

According to an embodiment, the voice output specifies the information relating to the transaction process.

For example, the information relating to the transaction process which was previously obtained by the reader device, e.g., which was previously input into the reader device, can be audibly presented to the user such that the user can hear this specific information relating to the transaction process and then decide whether or not to proceed with authentication and thus payment. This is an example concerning a payment transaction process. However, it is understood that any other transaction process may be carried out in the same manner.

According to an embodiment, activating the voice functionality of the reader device is prevented if it is determined that the set of application identifiers does not comprise the first application identifier associated to the voice application.

For example, in a further step, the method may comprise the determination whether the first application identifier associated to the voice application is present among the application identifiers within the set of application identifiers. The determination is positive if the first application identifier is found or identified in the set of application identifiers, whereas the determination is negative if the first application identifier is not found or identified in the set of application identifiers. In case of a positive determination regarding the presence of the first application identifier, the voice functionality is activated and the transaction process can be continued with the above-described voice output. In case of a negative determination regarding the presence of the first application identifier, the voice functionality is not activated and the transaction process can be continued without any voice output.

According to an embodiment, the first application identifier associated to the voice application initiates execution of a corresponding voice application on the reader device in order to activate the voice functionality of the reader device.

The first application identifier associated to the voice application may correspond to the voice functionality described herein, while a second or any further application identifier in the set of application identifiers may correspond to other transaction-related functionalities. The designation of first, second, or any further application identifiers does not necessarily indicate a specific order or sequence of application identifiers.

According to an embodiment, generating the user authentication data based on the biometric functionality of the user device comprises receiving a biometric characteristic of the user by the user device.

The biometric characteristic of the user may be provided as a result of an interaction between the user and the user device. In particular, biometric sensors, such as fingerprint scanners, iris scanners, or facial recognition systems, may be integrated within the user device, which enables the user device to capture corresponding biometric characteristics of the user.

In an example, the user device is a biometric-enabled card-like data carrier comprising a fingerprint scanner or sensor located on a surface thereof. The user may press a finger onto the fingerprint scanner or sensor which is located on one side of the card-like data carrier while the card-like data carrier is held close to the reader device such that a communication between the card-like data carrier and the reader device is enabled, wherein the communication between the card-like data carrier and the reader device allows the authentication information to be transmitted from the card-like data carrier to the reader device.

According to an embodiment, generating the user authentication data based on the biometric functionality of the user device comprises verifying a biometric characteristic of the user by the user device.

This verification may include a comparison between a fingerprint profile stored on the user device, e.g., the biometric-enabled card-like data carrier, and the fingerprint profile which was scanned by the fingerprint scanner or sensor during the authentication step. If the stored fingerprint profile matches the scanned fingerprint profile, the correctness of the scanned biometric characteristic is verified and thus confirmed, resulting in a positive authentication. If the stored fingerprint profile does not match the scanned fingerprint profile, an incorrectness of the scanned biometric characteristic is determined, resulting in a negative authentication which may lead to abandonment or cancellation of the transaction process.

In an example, generating the user authentication data based on the biometric functionality of the user device comprises identifying a fingerprint of the user by the user device.

In an example, the method also comprises providing a further voice output to the user of the user device upon negative authentication of the user.

The further voice output may comprise an audible indication to the user that the authentication was negative, i.e., unsuccessful. This allows a visually impaired user to recognize based on the voice output that the transaction process was not successful and/or to proceed with a second authentication attempt.

According to an embodiment, the user device is a biometric-enabled card, a mobile computing device with a biometric functionality or a mobile phone with a biometric functionality.

The biometric-enabled card may be a biometric-enabled payment card like a biometric-enabled credit card, a biometric-enabled debit card or any other biometric-enabled card that is configured to provide the transaction process as described herein. The user device may also be a mobile computing device like a tablet computer, or a mobile phone like a smart phone, having a sensor for detecting biometric characteristics of the user.

According to an aspect of the invention, a reader device for providing a biometric-enabled transaction process is provided. The reader device comprises a processing unit and a voice generation unit for providing a voice functionality. The processing unit is configured to obtain an information relating to a transaction process. The processing unit is further configured to receive a set of application identifiers from a user device. The voice generation unit is configured to activate the voice functionality if it is determined, for example by the processing unit, that the received set of application identifiers comprises a first application identifier associated to a voice application, such that the voice functionality configures the voice generation unit to provide a voice output to a user of the user device. The processing unit is configured to receive user authentication data from the user device. The processing unit is further configured to initiate the transaction process upon positive authentication of the user.

The components and functionalities described with respect to the inventive method for providing a biometric-enabled transaction also apply to the components and functionalities of the inventive reader device.

According to an aspect of the invention, a system for providing a biometric-enabled transaction process is provided. The system comprises a user device having a biometric functionality and a reader device having a voice functionality. The reader device is configured to obtain an information relating to a transaction process. The reader device is further configured to receive a set of application identifiers from the user device. The reader device is further configured to activate the voice functionality of the reader device if it is determined that the received set of application identifiers comprises a first application identifier associated to a voice application, such that the voice functionality configures the reader device to provide a voice output to a user of the user device. The user device is configured to generate user authentication data based on the biometric functionality of the user device. The reader device is configured to receive the user authentication data from the user device. The reader device is further configured to initiate the transaction process upon positive authentication of the user.

The components and functionalities described with respect to the inventive method for providing a biometric-enabled transaction also apply to the components and functionalities of the inventive system.

Exemplary embodiments of the invention are explained in more detail below with reference to schematic drawings.
- Fig. 1: shows a schematic representation of a system for providing a biometric-enabled transaction process.
- Fig. 2: shows a flow diagram of a method for providing a biometric-enabled transaction process.
- Fig. 3: shows a flow diagram of an exemplary biometric-enabled transaction process.

In the drawings, identical or functionally identical elements are provided with the same reference signs.

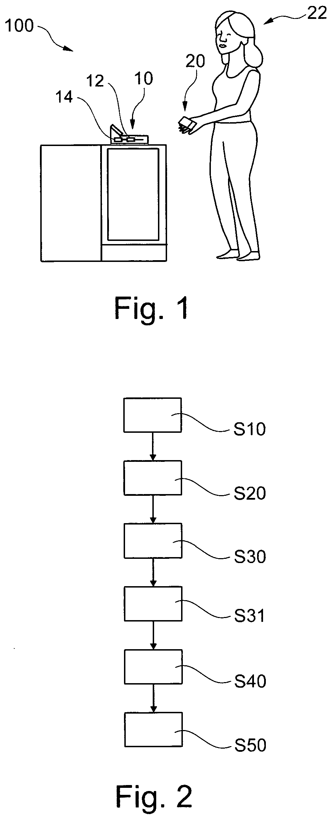

Fig. 1 shows a schematic representation of a system 100 for providing a biometric-enabled transaction process. The system 100 comprises a user device 20, for example a card-like data carrier having a biometric functionality, and a reader device 10, for example a payment terminal having a voice functionality. Fig. 1 shows a situation in which the user 22 of the user device 20 attempts to carry out a transaction process, for example a payment transaction process, at the payment terminal. The user 22 may be a visually impaired person and may have difficulties with reading any information, for example an amount to be paid, that is displayed on the reader device 10. Although it is possible that the cashier (not shown in Fig. 1) may communicate such information to the user 22, it may be easier and more secure for the user 22 if the user 22 received the information about the amount to be paid via other reliable sources.

To address this, the system 100 may provide the following functionalities:
The reader device 10 may be configured to obtain an amount relating to a transaction process.

This may be achieved by the cashier inputting the amount relating to the transaction process, e.g., the amount to be paid, into the reader device 10.

When the user 22 presents the user device 20, e.g., the card-like data carrier, to the reader device 10, a communication link between the reader device 10 and the user device 20 may be established.

The reader device 10 may then be configured to receive a set of application identifiers from the user device 20 and to activate the voice functionality of the reader device 10 if it is determined that the received set of application identifiers comprises a first application identifier associated to a voice application. If the first application identifier associated to the voice application is present in the set of application identifiers, the voice functionality configures the reader device 10 to provide a voice output to the user 22 of the user device 20, wherein the voice output vocalizes the amount relating to a transaction process to the user 22 such that the user 22 can hear the amount relating to the transaction process and thus knows the amount from a secure source.

In order to enable the transaction, the user 22 may then simply carry out an authentication, for example using the biometric functionality of the user device 20. This biometric functionality may include scanning and verifying a fingerprint of the user 22 based on which user authentication data is generated.

The reader device 10 is then further configured to receive the user authentication data from the user device 20. Depending on the authentication data received by the reader device 10, the reader device 10 may initiate the transaction process. In particular, upon positive authentication of the user 22, the transaction process can be initiated, whereas upon negative authentication of the user 22, the transaction process can be denied.

The voice functionality may configure the reader device 10 to provide another voice output to the user 22 indicating the positive or the negative authentication.

Fig. 2 shows a flow diagram of a method for providing a biometric-enabled transaction process. The method may be executed by the system 100 as described with respect to Fig. 1. A step S10 of the method comprises obtaining an amount relating to a transaction process at a reader device 10. Another step S20 of the method comprises receiving, at the reader device 10, a set of application identifiers from a user device 20 having a biometric functionality. Another step S30 of the method comprises activating a voice functionality of the reader device 10 if it is determined that the received set of application identifiers comprises a first application identifier associated to a voice application, wherein the voice functionality configures the reader device 10 to provide a voice output to a user 22 of the user device 20. Another step S31 of the method may comprise providing the voice output to the user 22 of the user device 20 upon activating the voice functionality of the reader device 10. Another step S40 of the method comprises receiving, by the reader device 10, user authentication data from the user device 20, wherein the user authentication data is generated based on the biometric functionality of the user device 20. Another step S50 of the method comprises initiating the transaction process upon positive authentication of the user 22.

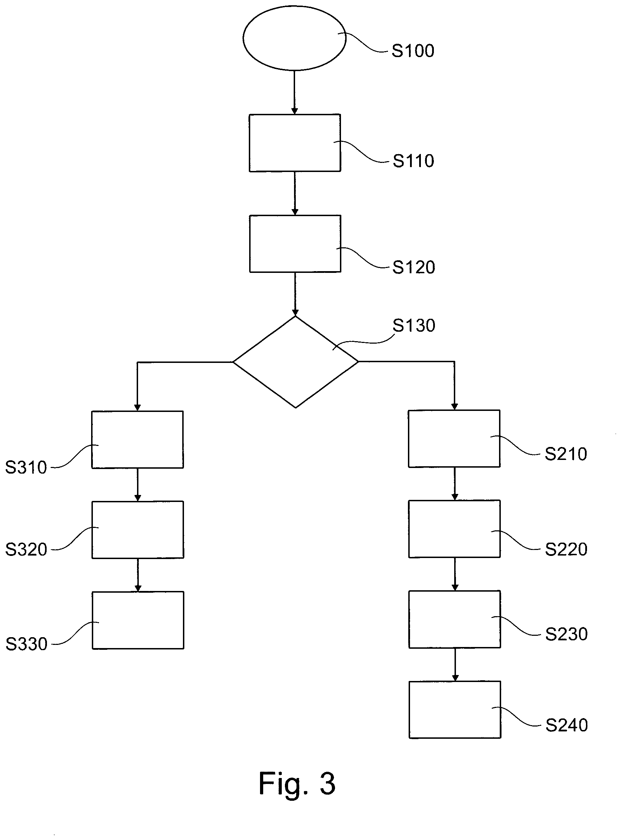

Fig. 3 shows a flow diagram of an exemplary biometric-enabled transaction process. The transaction process may be executed by the system 100 as described with respect to Fig. 1.

If a visually impaired user 22 wishes to carry out a payment transaction process, a cashier will specify an amount of money to be paid in the payment terminal 10 in step S100, for example by inputting the specified amount of money to be paid into the payment terminal 10. This amount will be displayed on a display screen of the payment terminal 10, but cannot be visually seen by the user 22 due to the visual impairment.

In step S110, the user 22 may then present a payment card 20 with biometric functionality to the payment terminal 10, thus enabling a data transfer between the payment card 20 and the payment terminal 10. At this step, the user 22 might not use the biometric functionality of the payment card 20. In particular, the activation of the voice functionality described in the following may be carried out without using any biometric function of the payment card 20.

The payment card 20 may have stored a plurality of application identifiers, wherein one of these application identifiers, e.g., the above-mentioned first application identifier associated to the voice application, is configured to activate a voice application on the payment terminal 10. In step S120, the payment terminal 10 may read all application identifiers stored in the payment card 20.

In step S130 (decision step), the payment terminal 10 determines whether the first application identifier associated to the voice application is present among the application identifiers read out from the payment card 20.

If the payment terminal 10 determines the presence of the first application identifier that is associated to the voice application, the voice functionality of the payment terminal 10 is activated in step S210. This activation may enable a voice output functionality of the payment terminal 10, wherein the voice output specifies the amount to be paid to the user 22, for example via a loudspeaker or the like, such that the user 22 can audibly perceive the amount to be paid which was previously input by the cashier into the payment terminal 10.

In step S220, the transaction process may then be started by the payment terminal 10., wherein the transaction process may include an authentication of the user 22.

In step S230, the authentication may be carried out by the user 22 presenting the payment card 20 to the payment terminal 10 while using the biometric functionality of the payment card 20, for example by pressing a finger onto a fingerprint sensor of the payment card 20. The authentication thus includes obtaining a physical or biometric characteristic of the user 22 based on which the user 22 is identified.

If the user identification is successful and the authentication is thus positive, the payment transaction process is initiated and/or completed by the payment terminal 10 in step S240.

If the payment terminal 10 determines in step S130 (decision step) that the first application identifier that is associated to the voice application is not present among the application identifiers, the voice functionality of the payment terminal 10 is not activated. Instead, the payment terminal 10 may then directly start the transaction process in step S310, wherein the transaction process may include an authentication of the user 22.

In step S320, the authentication may be carried out by the user 22 presenting the payment card 20 to the payment terminal 10 while using the biometric functionality of the payment card 20, for example by pressing a finger onto a fingerprint sensor of the payment card 20. The authentication thus includes obtaining a physical or biometric characteristic of the user 22 based on which the user 22 is identified.

If the user identification is successful and the authentication is thus positive, the payment transaction process is initiated and/or completed by the payment terminal 10 in step S330.

## Claims

1. A method for providing a biometric-enabled transaction process, comprising:
obtaining an information relating to a transaction process at a reader device (10, S10);
receiving, at the reader device (10), a set of application identifiers from a user device (20) having a biometric functionality (S20);
activating a voice functionality of the reader device (10) if it is determined that the received set of application identifiers comprises a first application identifier associated to a voice application, wherein the voice functionality configures the reader device (10) to provide a voice output to a user (22) of the user device (20, S30);
receiving, by the reader device (10), user authentication data from the user device (20), wherein the user authentication data is generated based on the biometric functionality of the user device (20, S40);
initiating the transaction process upon positive authentication of the user (22, S50).

2. The method of claim 1, comprising:
providing the voice output to the user (22) of the user device (20) upon activating the voice functionality of the reader device (10, S31).

3. The method according to any one of the preceding claims,
wherein the voice output specifies the information relating to the transaction process.

4. The method according to any one of the preceding claims,
wherein activating the voice functionality of the reader device (10) is prevented if it is determined that the set of application identifiers does not comprise the first application identifier associated to the voice application.

5. The method according to any one of the preceding claims,
wherein the first application identifier associated to the voice application initiates execution of a corresponding voice application on the reader device (10) in order to activate the voice functionality of the reader device (10).

6. The method according to any one of the preceding claims,
wherein generating the user authentication data based on the biometric functionality of the user device (20) comprises receiving a biometric characteristic of the user (22) by the user device (20).

7. The method according to any one of the preceding claims,
wherein generating the user authentication data based on the biometric functionality of the user device (20) comprises verifying a biometric characteristic of the user (22) by the user device (20).

8. The method according to any one of the preceding claims,
wherein the user device (20) is a biometric-enabled card, a mobile computing device with a biometric functionality or a mobile phone with a biometric functionality.

9. A reader device (10) for providing a biometric-enabled transaction process, comprising:
a processing unit (12);
a voice generation unit (14) for providing a voice functionality;
wherein the processing unit (12) is configured to obtain an information relating to a transaction process;
wherein the processing unit (12) is configured to receive a set of application identifiers from a user device (20);
wherein the voice generation unit (14) is configured to activate the voice functionality if it is determined that the received set of application identifiers comprises a first application identifier associated to a voice application, such that the voice functionality configures the voice generation unit (14) to provide a voice output to a user (22) of the user device (20);
wherein the processing unit (12) is configured to receive user authentication data from the user device (20);
wherein the processing unit (12) is configured to initiate the transaction process upon positive authentication of the user (22).

10. A system (100) for providing a biometric-enabled transaction process, comprising:
a user device (20) having a biometric functionality;
a reader device (10) having a voice functionality;
wherein the reader device (10) is configured to obtain an information relating to a transaction process;
wherein the reader device (10) is configured to receive a set of application identifiers from the user device (20);
wherein the reader device (10) is configured to activate the voice functionality of the reader device (10) if it is determined that the received set of application identifiers comprises a first application identifier associated to a voice application, such that the voice functionality configures the reader device (10) to provide a voice output to a user (22) of the user device (20);
wherein the user device (20) is configured to generate user authentication data based on the biometric functionality of the user device (20);
wherein the reader device (10) is configured to receive the user authentication data from the user device (20);
wherein the reader device (10) is configured to initiate the transaction process upon positive authentication of the user (22).
